Europäisches Patentamt

European Patent Office

Office européen des brevets

(11) Publication number: **0 082 623**
**B1**

# EUROPEAN PATENT SPECIFICATION

(45) Date of publication of patent specification: **13.08.86**

(21) Application number: **82306439.9**

(22) Date of filing: **03.12.82**

(51) Int. Cl.⁴: **G 02 B 6/24,** H 04 B 9/00,
G 02 F 1/33

(54) Acousto-optic T-couplers for communication networks.

(30) Priority: **21.12.81 US 332386**

(43) Date of publication of application:
**29.06.83 Bulletin 83/26**

(45) Publication of the grant of the patent:
**13.08.86 Bulletin 86/33**

(84) Designated Contracting States:
**DE FR GB**

(56) References cited:
**DE-A-2 731 722**
**US-A-4 133 612**
**US-A-4 213 677**

**IBM TECHNICAL DISCLOSURE BULLETIN, vol.
21, no. 5, October 1978, F. GFELLER ET AL:
"MODULATOR AND TAP FOR OPTICAL FIBER
SYSTEMS", PAGES 2014,2015**

(73) Proprietor: **XEROX CORPORATION**
**Xerox Square - 020**
**Rochester New York 14644 (US)**

(72) Inventor: **Rawson, Eric G.**
**20887 Maureen Way**
**Saratoga California 95070 (US)**

(74) Representative: **Weatherald, Keith Baynes et al**
**European Patent Attorney Rank Xerox Limited**
**Patent Department 338 Euston Road**
**London NW1 3BH (GB)**

Courier Press, Leamington Spa, England.

## Description

This invention relates to optical communication systems and, more particularly, to acousto-optic couplers for coupling optical radiant energy (hereinafter referred to as "light") into and out of optical communication networks.

Fiber optic waveguides are a viable, relatively broad bandwidth alternative to the coaxial cable transmission lines that are now in widespread use in communication networks. As is known, there are single mode and multi-mode, single fiber and multi-fiber optical waveguides. Single mode fibers have a superior bandwidth/length characteristic, but are difficult to splice and repair because of their relatively small core diameters (typically 2—20 µm). They may be used to advantage in relatively long haul, high speed communication networks—viz., networks having a length in excess of several km and a data rate higher than about 200 Mbits/sec. Otherwise, however, multi-mode fibers are the optical waveguides of choice because to their greater core diameters (typically 40—400 µm).

Multi-mode fiber optic bundles (i.e., multi-fiber waveguides) are particularly well suited for relatively short length, low speed communciation networks. They inherently provide redundancy because of their multi-fiber construction and they are reasonably easy to couple efficiently to available light sources, such as light-emitting diodes (LEDs) and diode lasers, because of their relatively large cross-sectional areas. However, they suffer from the disadvantages of (1) having a cost which increases as a function of the number of fibers in the bundle, (2) requiring substantial clearances because of their relatively large cross-sectional areas, and (3) often having a relatively large packing injection loss because of the claddings for the several fibers and the inactive areas therebetween. The packing injection losses usually can be reduced to an extent at the expense of increased manufacturing costs, but such costs are frequently difficult to justify.

Fortunately, there now are higher power LEDs and laser diodes which simplify the task of coupling sufficient light into multi-mode, single strand, fiber optic waveguides for transmission over distances of up to several km without repeaters. Thus, such waveguides have become the preferred optical communications medium for use in most medium-to high-speed local area networks.

Linear network architectures are becoming increasingly popular, at least in part as a result of the trend toward distributed processing. For example, the Xerox Ethernet local area network has an open loop linear architecture so that terminals (e.g., workstations; shared resources, such as printers and file servers; and other types of processors) may be added to the network simply by tapping into a coaxial cable communications medium. One of the features of the standard Ethernet network is that fail-safe taps are used so that there is through transmission along the network even if there is a local power failure.

A rugged and reliable optical T-coupler is required for coupling local terminals to single strand, single or multi-mode fiber optic waveguides if such waveguides are to serve as the communications media for linear optical communication networks. Indeed, to provide a full optical counterpart to existing coaxial cable networks, such as the Xerox Ethernet network, a failsafe coupler is needed. That, of course, rules out optical couplers which rely on active repeaters for through transmission.

Others have proposed fail-safe optical T-couplers which are suitable for coupling local terminals to single strand fiber optic waveguides. The twin T-coupler Ueno and Oogi described at the May 1976 CLEOS Conference in San Diego, California in a paper entitled "Data Highway Using Optical Fiber Cable" is an especially relevant example. In particular, that coupler is configured for coupling local terminals to a dual bus, bidirectional network. To that end, it comprises four SELFOC collimating lenses and a beam-splitting prism which are assembled so that each bus is connected to the prism by two of the SELFOCs. Furthermore, in accordance with Ueno and Oogi's teachings, each terminal has a pair of lasers or LED light sources and a pair of photodiodes which are aligned on opposite sides of the beam-splitting prism of the associated coupler. Unfortunately, such a coupler does not efficiently couple locally-injected light into the buses, even if the light sources are imaged onto the beam splitting prism. In may be adequate for relatively short haul communications over single strand, multi-mode waveguides if relatively high power, well collimated light sources and relatively sensitive photodetectors are used. Nevertheless, a more efficient coupler is clearly needed.

The acousto-optic modulator/coupler shown in US—A—3,920,982, is also of some interest. It relies on bulk acoustic energy for modulating and scattering light guided by a continuous, single or multi-fiber optical waveguide. Otherwise, however, that device is of no particular relevance because it does not have the ablity to couple locally-injected light into the waveguide.

In accordance with the present invention, a fail-safe optical T-coupler is provided which is as claimed in the appended claims.

While the application of the coupler to linear optical networks is emphasized, it will be understood that it may also be used to advantage in ring networks.

Still further objects and advantages of this invention will become apparent when the following detailed description is read in conjucnction with the attached drawings, in which:

Figures 1A and 1B are diagrammatic side views of a fail-safe unidirectional optical T-coupler constructed in accordance with the present invention;

Figure 2 is a diagrammatic side of a single source/single driver, fail-safe bidirectional optical T-coupler embodying this invention;

Figure 3 is a diagrammatic side view of a dual source, single driver alternative to the bidirectional coupler shown in Figure 2;

Figure 4 is a diagrammatic side view of a dual source/dual driver bidirectional coupler constructed in accordance with this invention;

Figures 5A and 5B are enlarged left-hand and right-hand end views, respectively, of the coupler shown in Figure 4;

Figure 5C is a sectional view of the coupler shown shown in Figure 4 which is taken along the line 5C—5C in Figure 4 looking in the direction of the arrows;

Figure 6 is a diagrammatic side view of dual source/single driver alternative to the bidirectional coupler shown in Figure 4;

Figures 7A and 7B are opposite end views of one implementation of the coupler shown in Figure 6;

Figures 8A and 8B are opposite end views of another implementation of the coupler shown in Figure 6;

Figures 9A and 9B are opposite end views of still another implementation of the coupler shown iin Figure 6; and

Figure 10 is a diagrammatic side view illustrating a tilted bus/coupler orientation that may be used to optimize the fail-safe transmission characteristics of couplers embodying this invention.

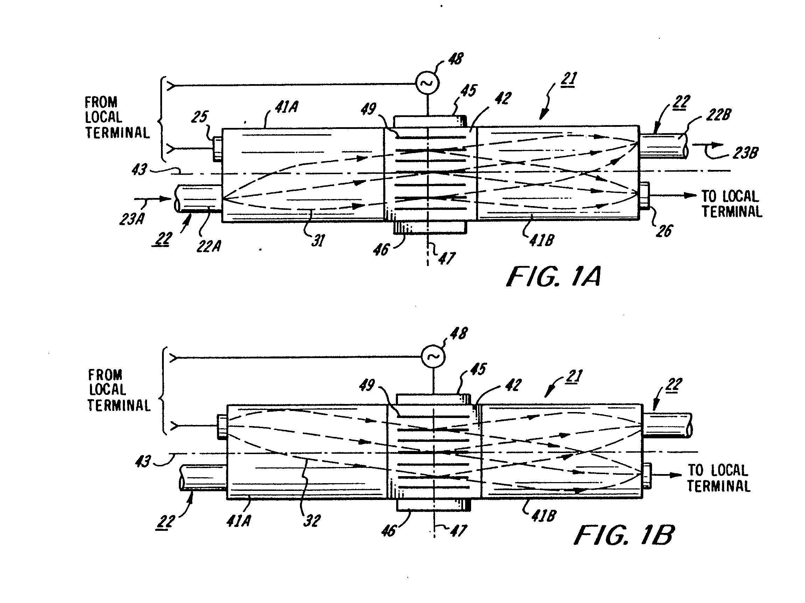

Turning now to the drawings, and at this point especially to Figures 1A and 1B, there is a unidirectional optical T-coupler 21 for coupling a local terminal (shown only in relevant part) to a segmented data bus 22 of, say a unidirectional linear or ring-like optical communications network. The bus 22 typically comprises a series of single strand, multimode fiber optic waveguides 22a and 22b, and the network data flow is from the waveguide 22a to the waveguide 22b, as indicated by the arrows 23a and 23b.

For transmitting and receiving data via the bus 22, the local terminal has a suitable light source 25, such as a laser diode or a light-emitting diode (LED), and a suitable photodetector 26, such as a photodiode. As will be appreciated, similar provision is made for interfacing each of the other or remote terminals (not shown) to the network data bus 22.

Network communication protocols are beyond the scope of the present invention. Nevertheless, it should be understood that the network conventionally is controlled (by means not shown) so that no more than one terminal is transmitting data over the bus 22 at any given time. Therefor, it may be assumed that data-modulated light is injected into the coupler 21 by the light source 25 ("locally-injected light") and by one or another of the remote light sources ("remotely-injected light") at mutually-exclusive times. Moreover, it should be noted that the remotely-injected light beam 31 (Figure 1A) is modulated (by means not shown) in accordance with a predetermined pulse code to transmit data from one of the remote terminals to the local terminal and/or to one or more of the other remote terminals. Likewise, the locally-injected light beam 32 (Figure 1B) is modulated (by means also not shown) in accordance with a suitable pulse code to transmit data from the local terminal to one or more of the remote terminals. As will be appreciated, one of the advantages of the coupler 21 is that the remotely and locally injected light beams 31 and 32 may be modulated at the same frequency, at different frequenceies, or even at variable frequencies. Therefore, there are relatively few constraints on the pulse codes that can be accommodated.

In accordance with the present invention to provide a fail-safe path for transmitting remotely-injected light 31 (Figure 1A) from the waveguide 22a to the waveguide 22b, the coupler 21 comprises a pair of substantially matched collimating lenses 41a and 41b, such as cylindrical self focusing lenses (commonly referred to as SELFOC rods), for coupling the waveguides 22a and 22b, respectively, to opposite ends of an optically transparent acousto-optic cell 42, such as a rectangular block of glass. The SELFOC lenses 41a and 41b and the acousto-optic cell 42 typically have flat, optically polished mating surfaces; and an index matching cement preferably is used to bond the lenses 41a and 41b to the waveguides 22a and 22b, respectively, and to the acousto-optic cell 42.

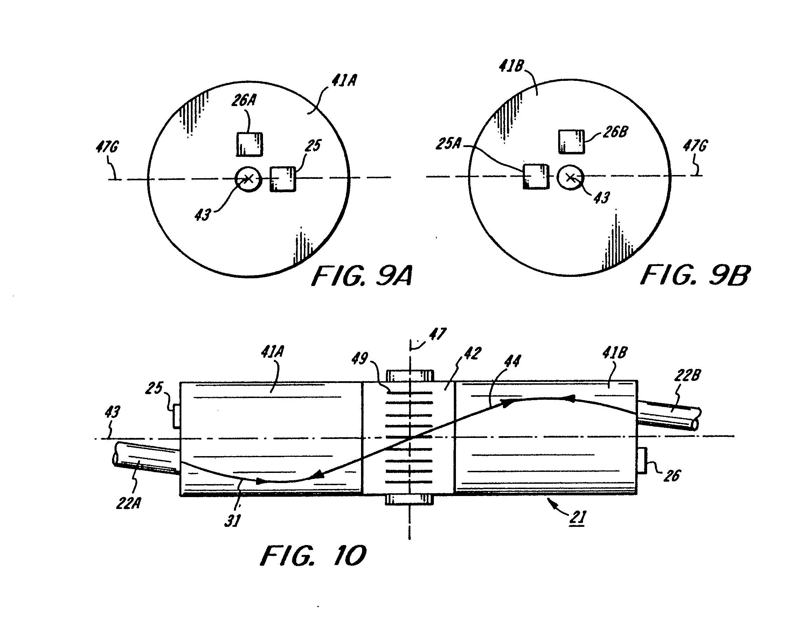

More particularly, the optical axes of the lenses 41a and 41b are aligned to define a generally linear, longitudinally extending optical axis 43 for the coupler 21. It will be noted that in this embodiment, the waveguides 22a and 22b are attached or otherwise coupled to the lenses 41a and 41b, respectively, in symmetrical laterally offset relationship relative to the optical axis 43. The magnitude of this offset is selected so that the rays of the remotely-injected light beam 31, which are substantially collimated in the region of the acousto-optic cell 42, are oriented within the acousto-optic cell 42 at an angle relative to the optical axis 43 substantially equal to the Bragg angle for the ultrasonic grating 49 as more fully discussed hereinbelow. Furthermore, as shown in Figure 10, the waveguides 22a and 22b may be tilted at appropriate equal but opposite angles relative to the optical axis 43 so that the principal ray 44 of the remotely-injected light beam 31 crosses the optical axis 43 midway between the lenses 41a and 41b. As a general rule, however, the longitudinal displacement of the point at which the principal ray 44 crosses the optical axis 43 is so slight, and of such minor consequence when compared against such an idealized model, that such compensation is not required.

For interfacing the local terminal with the coupler 21, the waveguide 22a and the light source 25 are laterally offset from one another and are coupled to one end of the acousto-optic cell 42 by the lens 41a. Also, in this particular embodiment, the waveguide 22b and the photodetector 26 are laterally offset from one another and are coupled to the opposite end of the acousto-opic cell 42 by the lens 41b. Typically, the light source 25 and the photodetector 26 are butt coupled to the lenses 41a and 41b, respectively in symmetrical laterally offset relationship relative to the optical axis 43 of the coupler 21.

In keeping with this invention, to couple the local terminal to the bus 22, the coupler 21 comprises an acoustic transducer 45 and an acoustic absorber 46 (collectively referred to herein as an acoustic driver) which are mounted on opposite sides of the acousto-optic cell 42 to define a laterally extending acoustic axis 47 for the coupler 21. As shown, the acoustic axis 47 of the coupler 21 is generally orthogonal to its optical axis 43, but that is not an essential relationship.

In operation, the transducer 45 is driven at a predetermined frequency by a suitable source 48 to couple bulk acoustic waves into the acousto-optic cell 42. The acoustic waves travel through the acousto-optic cell 42 along its acoustic axis 47 until they reach the acoustic absorber 46 where they are effectively absorbed so that little, if any, of the acoustic energy is reflected therefrom. Consequently, an ultrasonic grating 49 having a predetermined grating frequency is created along the acoustic axis 47 of the coupler 21.

As will be seen, the local terminal is coupled to the bus 22 by Bragg reflection from the ultrasonic grating 49. Accordingly, there is symmetry about the acoustic axis 47 between the waveguide 22a and the photodetector 26 and between the light source 25 and the waveguide 22b. Moreover, to account for the lateral displacement of the waveguides 22a and 22b from the optical axis 43 of the coupler 21, the photodetector 26 and the light source 25 are displaced from the optical axis 43 in mirror image relationship relative to the waveguides 22a and 22b, respectively.

Considering the bus/terminal interface in some additional detail, it will be noted that the acoustic transducer 45 of this embodiment is driven when the local terminal is operating in either a transmit mode or a receive mode. The source 48 holds the acoustic output power of the transducer 45 at a relatively low level when the local terminal is operating in a receive mode so that the grating 49 Bragg reflects a small percentage (e.g., 1% or so) of any remotely-injected light 31 (Figure 1A) from the waveguide 22a to the photodetector 26. Most of the remotely-injected light 31 is unaffected by the grating 49 and is, therefore, focused into the waveguide 22b for transmission to remote terminals on the network. Contrastingly, when the local terminal is operating in a transmit mode, the source 48 increases the acoustic output power of the transducer 45, thereby intensifying the grating 49 to maximize the amount of locally-injected light 32 (Figure 1B) that is Bragg reflected from the light source 25 to the waveguide 22b. As will be evident, the local terminal operates in its receive mode under quiescent conditions to monitor the bus 22 and switches into its transmit mode only when it is preparing to transmit data to one or more of the remote terminals.

An example will further illustrate the practical utility of this invention. For purposes of this example it will be assumed that:

(a) The remotely and locally injected light beams 31 and 32 both have a vacuum wavelength, $\lambda$, of 800 nm;

(b) The speed v, of sound in the acousto-optic cell 42 is 300 m/sec;

(c) The SELFOC lenses 41a and 41b both have diameter, d of 2 mm and a collimator length, l, of 7.3 mm;

(d) The waveguides 22a and 22b both have a numerical aperture, N.A., of 0.15; and

(e) The waveguides 22a and 22b, the light source 25, and the photodetector 26 are each laterally displaced from the optical axis 43 of the coupler 21 by a distance, x, of 75 μm.

As is known, light reflects from an acoustic sound wave if the light is incident on the sound wave at the so-called Bragg Angle, $\theta^B$, which may be calculated from the equation:

$$\text{Sin } \theta_B = \frac{\lambda_o}{2n\Omega} \qquad (1)$$

where:

$\lambda_o$=the vacuum wavelength of the light;

n=the refractive index of the medium carrying the acoustic wave; and

$\Omega$=the wavelength of the acoustic wave or sound in such medium.

In the coupler 21, the angle at which the remotely and locally injected light beams 31 and 32 are incident on the ultrasonic grating 49 is determined by the angle, $\theta$, which the waveguide 22a and the light source 25 subtend within the acousto-optic cell 42. That angle is given by:

$$\theta = \frac{x}{f} \qquad (2)$$

where:

f=the internal focal length of the SELFOC lens 41a.

By definition:

$$f = \frac{2l}{\pi} \qquad (3)$$

Using the foregoing assumptions to solve equations (2) and (3) by substitution, it is found that the lens 41a has an internal focal length, f, of about 4.65 mm and that the remotely and locally injected light beams 31 and 32 are incident on the grating 49 at an angle, $\theta$, of approximately 0.016 radians or 0.924 degrees. Now, if the Bragg angle, $\theta_B$, is assumed to be equal to the angle of incidence, $\theta$, equation (1) can be rewritten to determine the frequency, F, at which the transducer 45 should be driven to cause the light beams 31 and 32 to Bragg reflect from the grating 49:

$$F = \frac{\theta \cdot v}{\lambda} \qquad (4)$$

where:

$\theta$=the angle of incidence of the light beams 32 and 32 as measured in radians.

Equation (4), in turn, can be solved by substitution to show that the appropriate drive frequency F for the transducer 45 is roughtly 60 MHz. Furthermore, given the numerical aperture, N.A., of the waveguides 22a and 22b, it can be shown that the remotely injected light beam 31 has a diameter of approximately 0.88 mm within the acousto-optic cell 42, which means that the 2 mm diameter of the SELFOC lenses 41a and 41b is ample to accommodate the expansion of the light beam 31.

Additional embodiments of the invention are described hereinbelow using similar reference characters to identify like parts. Unique alphabetic suffixes have been added to certain of the reference characters to highlight the functional differences between the several embodiments, but new reference numerals have been introduced only to the extent necessary to identify functionally unique parts.

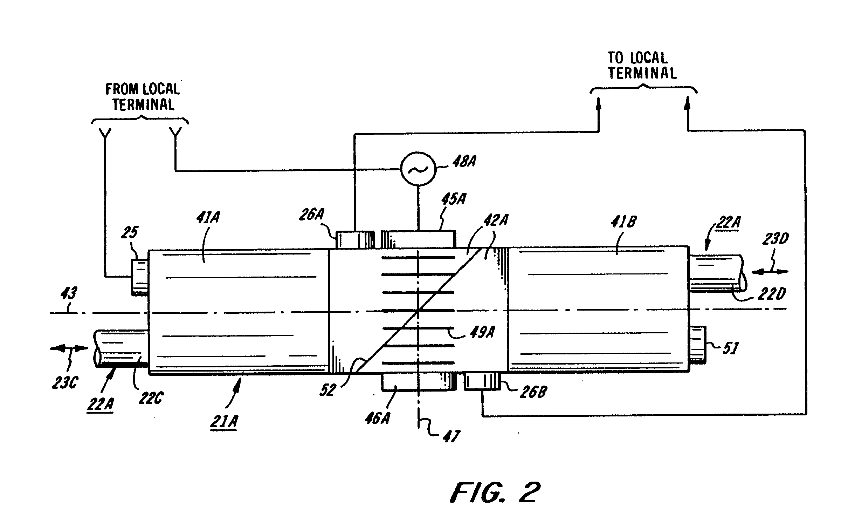

Referring to Figure 2, there is a bidirectional coupler 21a which is characterized by having a mirror 51 bonded or otherwise coupled to the SELFOC lens 41b in place of the photodetector 26 (Figures 1A and 1B). A beam splitter 52 is included in the coupler 21a so that a small percentage of any remotely-injected light received via the waveguides 22c or 22d is passively reflected to a photodetector 26a or to a photodetector 26b, respectively. To form the beam splitter 52, the acousto-optic cell 42a is conveniently assembled from two parts which have been severed at an appropriate angle so that a weakly reflective optical coating may be applied to one of their internal mating surfaces. Thus, the photodetectors 26a and 26b are shown as being mounted on opposite sides of the acousto-optic cell 42a. In view of the passive reflection provided by the beam splitter 52, the acoustic transducer 45a is driven by the source 48a only when the local terminal is operating in a transmit mode. The photodetectors 26a and 26b are, of course, electrically coupled in parallel, and the waveguides 22c or 22d are segments of a bidirectional data bus 22A, as indicated by the arrows 23c and 23d.

Focusing for a moment on the operation of the coupler 21a, it will be evident that the mirror 51 couples the light source 25 to the waveguide 22c when the local terminal is operating in a transmit mode. Specifically, locally-injected light which is not Bragg reflected into the waveguide 22d by the ultrasonic grating 49a is reflected from the mirror 51 and is therefore, available for Bragg reflection into the waveguide 22c.

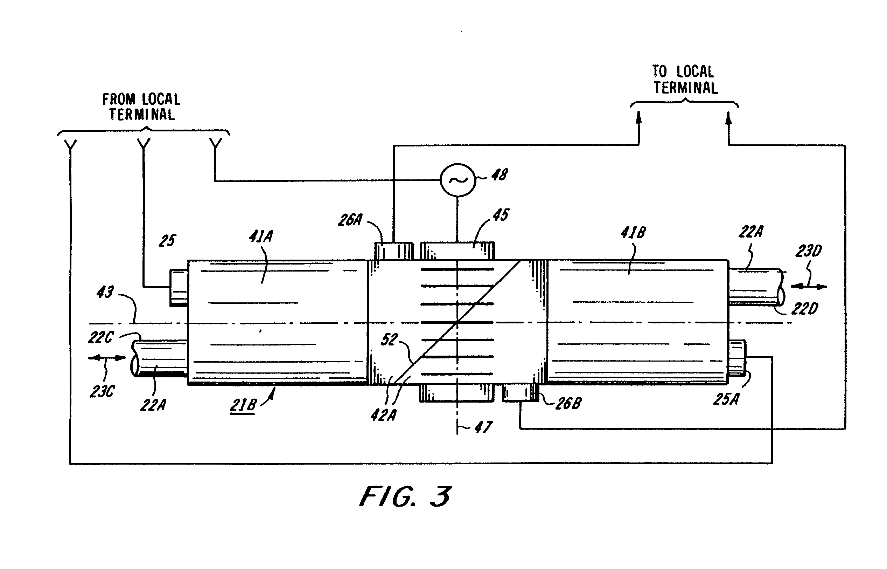

Turning to Figure 3, a bidirectional coupler 21b having a better balanced coupling characteristic for transmitting data from the local terminal may be provided by replacing the mirror 51 with a second light source 25a. Preferably, the light sources 25 and 25a are driven in parallel.

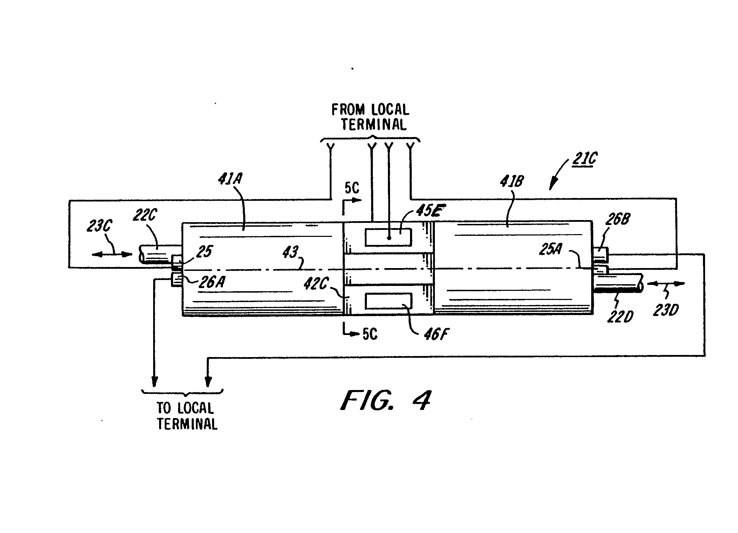

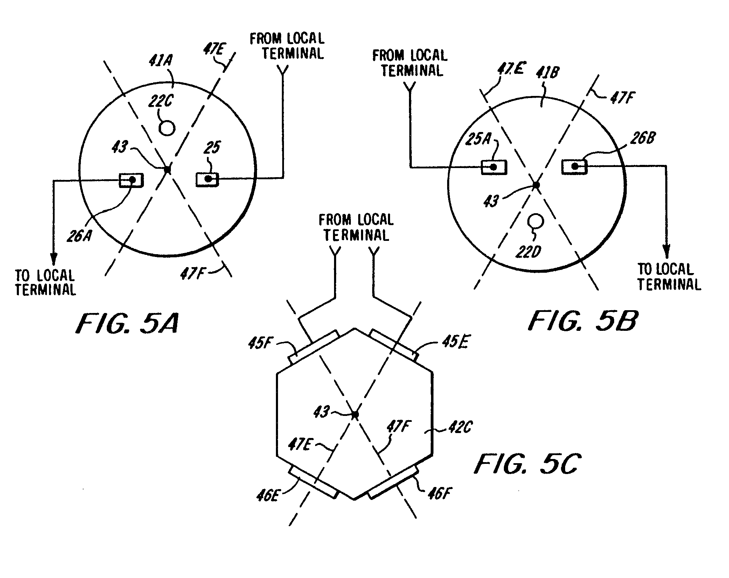

Alternatively, as shown in Figures 4 and 5A— 5C, a bidirectional coupler 21c may be constructed by bonding or otherwise coupling the waveguides 22c and 22d the light sources 25 and 25a and the photodetectors 26a and 26b to the outer faces of the collimating lenses 41a and 41b, respectively, on 120 degree centers. The waveguides 22c and 22d, the light sources 25 and 25a, and the photodetectors 26a and 26b are all laterally displaced from the optical axis 43 of the coupler 21c, but there is symmetry about the axis between the waveguides 22c and 22d to allow the fail-safe through transmission of remotely-injected light. As will be appreciated, the orientation of the waveguides 22c and 22d, the light sources 25 and 25a, and the photodetectors 26a and 26b on 120 degree centers simplifies the fabrication of the coupler 21c, but other center displacement angles could be used without departing from this invention. Moreover, while the waveguides 22c and 22d, the light sources 25 and 25a and the photodetectors 26a and 26b are illustrated as being well spaced from the optical axis 43 of the coupler 21c, it will be understood that those elements preferably are packed as close as possible around the axis 43 to minimize optical wavefront aberrations which tend to detract from the coupling efficiency.

To carry out this embodiment of Figures 4 and 5A—5C, the coupler 21c has a pair of acoustic transducers 45e and 45f and a pair of acoustic absorbers 46e and 46f. The transducers 45e and 45f are mounted on the acousto-optic cell 42c symmetrically with respect to the waveguides 22c and 22d on centers which are displaced from one another by 60 degrees (assuming that the waveguides 22c and 22d, the light sources 25 and 25a and the photodetectors 26a and 26b are on 120 degree centers as previously described). The acoustic absorbers 46e and 46f, on the other hand, are mounted on the acousto-optic cell 42c in opposing relationship to the transducers 45c and 45f, respectively (i.e., on centers which are displaced from the centers of the transducers 45e and 45f, respectively, 180 degrees). Thus, the coupler 21c has a pair of acoustic axes 47e and 47f which (1) are displaced from one another by 60 degrees, (2) are symmetrical with respect to the waveguides 22c and 22d and (3) intersect with one another on the optical axis 43. Suitably, to simplify the mounting of the transducers 45e and 45f and the absorbers 46e and 46f, the acousto-optic cell 42c has a hexagonal sectional profile.

Briefly reviewing the operation of the coupler 21c, it will be seen that there is symmetry about the acoustic axis 47e between the waveguide 22c and the photodetector 26b and between the waveguide 22d and he photodetector 26a. Thus, when the local terminal is operating in receive mode, the transducer 45e is energized to create a relatively weak ultrasonic grating along the axis 47e so what a small percentage of any remotely-injected light is Bragg-reflected from the waveguides 22c and 22d to the photodetectors 26b and 26a respectively. Likewise, there is symmetry about the acoustic axis 47f between the waveguide 22c and the light source 25a and between the waveguide 22d and the light source 25. Accordingly, when the local terminal is operating in a transmit mode, the other transducer 45f is energized to create a relatively intense ultrasonic grating along the axis 47f, whereby locally-injected light is Bragg-reflected from the light sources 25a and 25 to the waveguides 22c and 22d, repectively. Of course, if neither of the transducers 45e or 45f is energized, the waveguides 22c and 22d are simply imaged on to each other for fail-safe through transmission of any remotely-injected light.

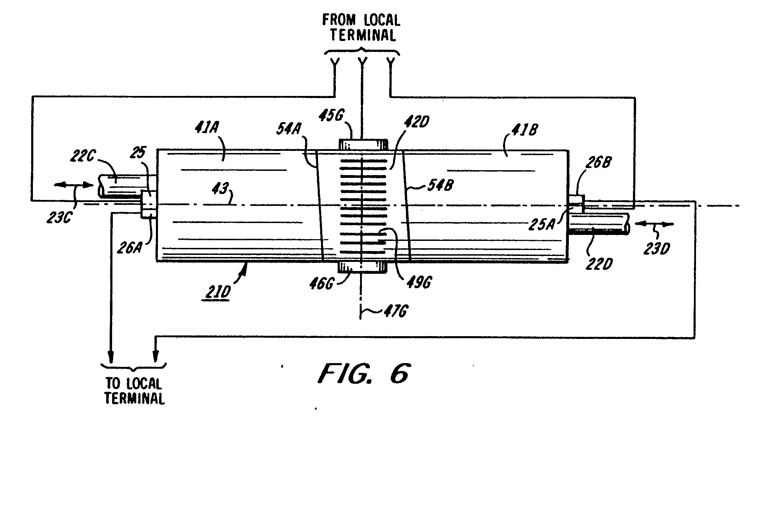

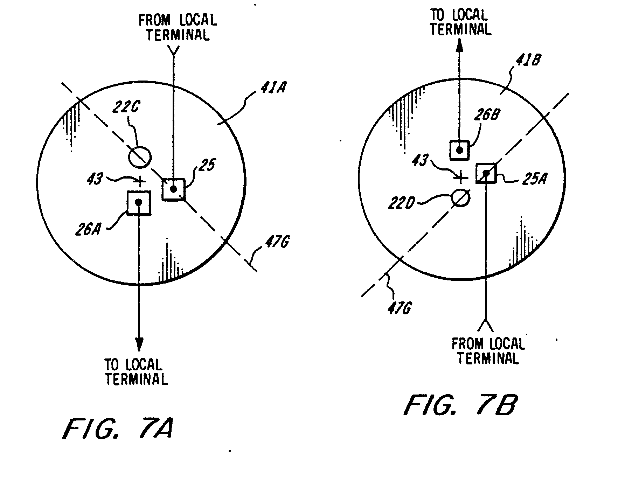

Turning to Figure 6, there is bidirectional coupler 21d which has end-mounted light sources 25 and 25a and photodetectors 26a and 26b like the coupler 21c, but which requires only one acoustic transducer 45g and one acoustic absorber 46g (i.e., a single acoustic driver). To obviate the need for the second acoustic driver, the coupler 21d includes means for passively reflecting or redirecting a relatively small percentage of any remotely injected light from the waveguide 22c to the photodetector 26a and from the waveguide 22d to the photodetector 26b. For example, the opposite ends 54a and 54b of the acousto-optic cell 42d may be cut at an appropriate angle and coated with a weakly reflective coating to couple the waveguides 22c and 22d to the photodetectors 26a and 26b, respectively. Figures 7A—7B, 8A—8B, and 9A—9B illustrate specific implementations of the concept underlying the single driver bidirectional coupler of Figure 6.

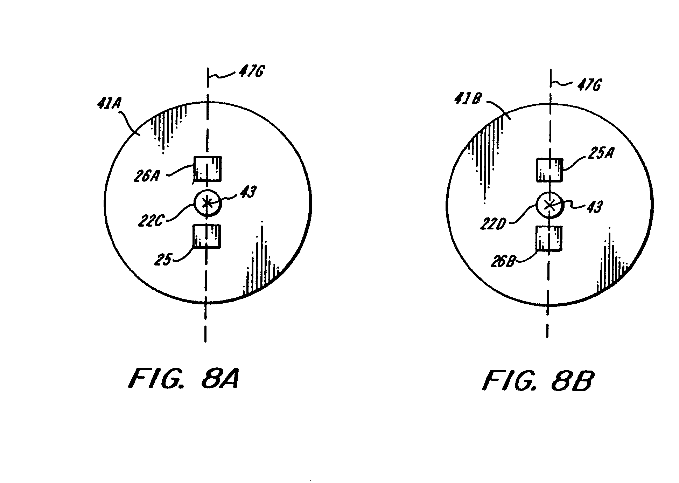

More particularly, if the ends 54a and 54b of the acousto-optic cell 42d are cut perpendicularly to the optical axis 43 of the coupler 21d, there must be symmetry, as shown in Figures 7A—7B, about the optical axis 43 between the waveguide 22c and the photodetectors 26a and between the waveguide 22d and the photodetectors 26b. Alternatively, however the ends 54a and 54b of the acousto-optic cell 42d may be beveled to accommodate asymmetrical relationship as shown in Figures 8A—8B and 9A—9B. In any event, the waveguides 22c and 22d are symmetrically displaced from the optical axis 43 (Figures 7A—7B) or are coaxial therewith (Figures 8A—8B and Figures 9A—9B) so that there is fail-safe transmission of any remotely-injected light. Furthermore, in all of these embodiments, there is symmetry about the acoustic axis 47g between the light source 25 and the waveguide 22d and between the light source 25a and the waveguide 22c. Thus, the ultrasonic grating 49g, which the transducer 45g creates within the acousto-optic cell 42d when the local terminal is operating in a transmit mode, Bragg-reflects the locally-injected light supplied by the light sources 25 and 25a into the waveguides 22d and 22c, respectively, as previously described.

While the tilted waveguide/coupler interface of Figure 10 is illustrated with specific reference to the unidirectional coupler 21, it will be understood that it may be used to provide compensation for the finite width of the acousto-optic cell 42, as measured along the optical axis 43, in any of the above-described bidirec tional couplers if desired.

## Claims

1. A fail-safe optical T-coupler (21) for coupling a local terminal having at least one light source (25) to a segmented optical data bus (22), the coupler comprising:
an optically-transparent acousto-optic cell (42);
first and second collimating lenses (41) respectively disposed one in front of each of two opposite ends of the cell for coupling two adjacent segments of the data bus to the opposite ends of the cell; the lenses having their axes aligned so as to define a generally linear optical axis (43) for the coupler, and the data bus segments to be coupled to the cell being respectively disposed on the side of the lenses remote from the cell, and symmetrically with respect to the optical axis, thereby providing a fail-safe path for transmitting remotely-injected light from one to another of the data bus segments; and
means (45) for coupling bulk acoustic waves into the cell when the terminal is operating in a transmit mode, thereby creating an ultrasonic grating within said cell along an acoustic axis (47),
the light source of the terminal being disposed on the surface of one of the lenses remote from the cell, and situated symmetrically about the acoustic axis with respect to a first of the data bus segments disposed on the surface of the other lens, whereby locally-injected light from the light source is Bragg-reflected by the created ultrasonic grating to at least the first data bus segment when the terminal is operating in its transmit mode.

2. The coupler of Claim 1, wherein
the terminal further includes at least one photodetector (26) interfaced with the coupler, and
the coupler includes means for redirecting a portion of the remotely-injected light to the photodetector.

3. The coupler of claim 2, wherein the redirecting means is a passive means interposed in the fail-safe path.

4. The coupler of Claims 2 or 3, wherein the redirecting means includes means for coupling relatively low power bulk acoustic waves into the acousto-optic cell when the terminal is operating in other than a transmit mode, thereby creating a relatively weak ultrasonic grating within the cell for Bragg-reflecting remotely-injected light from at least one of the data bus segments to the photodetector when the terminal is operating in other than a transmit mode.

5. The coupler of Claim 4, wherein
the Bragg-reflection of the remotely- and locally-injected light occurs from ultrasonic gratings created along the acoustic axis, and

the one data bus segment and the photodetector are coupled to the acousto-optic cell symmetrically with respect to the acoustic axis.

6. The coupler of Claim 4, wherein

Bragg-reflection of remotely- and locally-injected light occurs from ultrasonic gratings created along different acoustic axes,

the light source and the first data bus segment are coupled to the acousto-optic cell symmetrically with respect to a first of the acoustic axes, whereby locally-injected light is Bragg-reflected from the light source to at leat the first data bus segment when the terminal is operating in its transmit mode, and

the one data bus segment and the photodetector are coupled to the acousto-optic cell symmetrically with respect to another of the acoustic axes, whereby remotely-injected light is Bragg-reflected from at least the one data bus segment to the photodetector when the terminal is operating in its receive mode.

7. The coupler of Claim 6, wherein

the terminal has a pair of light sources and a pair of photodetectors,

a first of the light sources, a first of the photodetectors, and one of the data bus segments being on approximately 120° centers and coupled to one end of the acousto-optic cell by the first lens,

the second light source, the second photodetector, and the other data bus segment being on approximately 120° centers and coupled to the opposite end of the acousto-optic cell by the second lens,

there being symmetry about the first acoustic axis between the first light source and the other data bus segment, and between the second light source and the one data bus segment, for bidirectional transmission from the terminal, and

symmetry about the second acoustic axis between the first photodetector and the other data bus segment, and between the second photodetector and the one data bus segment for bidirectional reception by the terminal.

8. The coupler of Claim 7, wherein

the means for coupling acoustic bulk waves int the cell compries first and second acoustic transducers and first acoustic absorbers (46),

the first and second acoustic axes being displaced from one another by approximately 60°,

the first transducer and the first absorber being mounted in opposing relationship on said acousto-optic cell in alignment with the first acoustic axis to create and ultrasonic grating for Bragg-reflecting locally-injected light from the first light source to the other data bus segment, and from the second light source to the one data bus segment when the terminal is operating in a transmit mode, and

the second transducer and the second absorber are mounted in opposing relationship on the acousto-optic cell in alignment with the second acoustic axis to create an ultrasonic grating for Bragg-reflecting remotely-injected light from the other data bus segment to the first photodetector, and from the one data bus segment to the second photodetector when the terminal is operating in its receive mode.

9. The coupler as claimed in claim 1 or 2, wherein

the terminal has a pair of light sources and a pair of photodetectors,

the first and second lenses coupling the light sources and the data bus segments to the opposite ends of the acousto-optic cell symmetrically with respect to the acoustic axis, whereby the ultrasonic grating Bragg-reflects locally-injected light from one and the other of the light sources to one and the other of the data bus segments, respectively, when the terminal is operating in a transmit mode, and

the coupler includes means for passively redirecting a portion of the remotely-injected light from one and the other of the data bus segments to one and the other of the photodetectors, respectively, when the terminal is operating in its receive mode.

10. The coupler of Claim 9, wherein

the photodetectors are mounted on opposite sides of the coupler, and

the redirecting means includes a beam splitter (52) interposed between the first and second lenses for reflecting remotely-injected light to the photodetectors.

11. The coupler of Claim 9, wherein

the photodetectors are coupled by the first and second lenses, respectively, to opposite ends of the acousto-optic cell, and

the redirecting means includes partially-reflective optical coatings on the opposite ends of the acousto-optic cell for reflecting remotely-injected light to the photodetectors.

12. The coupler of any preceding claim, wherein the first and second lenses are matching self-focussing rods.

## Patentansprüche

1. Ausfallsichere, optische T-Kupplung (21) zum Koppeln einer örtlichen Endstation, die wenigstens eine Lichtquelle (25) aufweist, an einen segmentierten, optischen Datenübertragungsweg (22), wobei die Kupplung umfaßt:

eine optisch-transparente, akusto-optische Zelle (42),

erste und zweite kollimierende Linsen (41), von denen jeweils eine vor einem der beiden gegenüberliegenden Enden der Zelle zum Koppeln von zwei benachbarten Segmenten des Datenübertragunsweges mit zwei gegenüberliegenden Enden der Zelle angeordnet ist, wobei die Achsen der Linsen so ausgerichtet sind, daß sie eine allgemein lineare, optische Achse (43) für die Kupplung festlegen und die an die Zelle zu koppelnden Datenübertragungswegsegmente jeweils an der von der Zelle entfernten Seite der Linsen und symmetrisch in bezug auf die optische Achse angeordnet sind, wodurch ein ausfallsicherer Weg zum Übertragen von entfernt eingespeisten Licht von einem zu dem anderen Datenübertragungswegsegment gebildet wird, und

eine Einrichtung (45) zum Koppeln von akustischen Volumenwellen in die Zelle, wenn die Endstation mit einem Übertragunsmodus betrieben wird, wodurch ein Ultraschallgitter innerhalb der Zwlle längs einer akustischen Achse (47) erzeugt wird,

wobei die Lichtquelle der Endstation an der von der Zelle entfernten Oberfläche einer der Linsen angeordnet ist und sich symmetrisch zu der akustischen Achse in bezug auf ein erstes der Datenübertragunswegsegmente befindet, das an der Oberfläche der anderen Linse angeordnet ist, wodurch örtlich eingespeistes Licht von der Lichtquelle eine Bragg-Reflexion durch das erzeugte Ultraschallgitter bis zu wenigstens dem ersten Datenübertragungswegsegment erfährt, wenn die Endstation mit ihren Übertragungsmodus betrieben wird.

2. Kupplung nach Anspruch 1, bei der

die Endstation ferner wenigstens einen schnittstellenmäßig mit der Kupplung verbundenen Photowandler (26) aufweist, und

die Kupplung eine Einrichtung umfaßt, um einen Teil des entfernt eingespeisten Lichtes zu dem Photowandler zurückzuführen.

3. Kupplung nach Anspruch 2, bei der die Rückführeinrichtung eine passive Einrichtung ist, die in dem ausfallsicheren Weg angeordnet ist.

4. Kupplung nach Anspruch 2 oder 3, bei der die Rückführeinrichtung enthält

eine Einrichtung, um akustische Volumenwellen relativ geringer Energie in die akustooptische Zelle zu koppeln, wenn die Endstation mit einem anderen als dem Übertragungsmodus betrieben wird, wodurch ein relativ schwaches Ultraschallgitter innerhalb der Zelle geschaffen wird, um durch Bragg-Reflexion entfernt eingespeistes Licht von wenigstens einem der Datenübertragungswegsegmente zu dem Photowandler zu richten, wenn die Endstation mit einem anderen also dem Übertragungsmodus betrieben wird.

5. Kupplung nach Anspruch 4, bei der

die Bragg-Reflexion des entfernt und örtlich eingespeisten Lichtes an dem längs der akustischen Achse erzeugten Ultraschallgitter auftritt, und

das eine Datenübertragungswegsegment und der Photowandler symmetrisch in bezug auf die akustische Achse mit der akusto-optischen Zelle gekoppelt sind.

6. Kupplung nach Anspruch 4, bei der

Bragg-Reflexion des entfernt und örtlich eingespeisten Lichtes an längs unterschiedlicher, akustischer Achsen erzeugten Ultraschallgitter auftritt,

die Lichtquelle und das erste Datenübertragungswegsegment mit der akustooptischen Zelle symmetrisch in bezug auf eine erste der akustischen Achsen gekoppelt ist, wodurch örtlich eingespeistes licht durch Bragg-Reflexion von der Lichtquelle zu wenigstens dem ersten Datenübertragungswegsegment gelangt, wenn die Endstation in ihrem Uobertragungsmodus betrieben wird, und

das eine Übertragungswegsegment und der Photowandler mit der akusto-optischen Zelle symmetrisch in bezug auf eine andere der akustischen Achsen gekoppelt ist, wodurch entfernt eingestrahltes Licht durch Bragg-Reflexion von wenigstens dem einen Datenübertragungswegsegment zu dem Photowandler gelangt, wenn die Endstation mit ihrem Empfangsmodus betrieben wird.

7. Kupplung nach Anspruch 6, bei der die Endstation ein Paar Lichtquellen und ein Paar Photowandler aufweist,

eine erste der Lichtquellen, ein erster der Photowandler und eines der Datenübertragungswegsegmente Zentriwinkel von ungefähr 120° aufweisen und an ein Ende der akusto-optischen Zelle über die erste Linse gekoppelt sind,

die zweite Lichtquelle, der zweite Photowandler und das andere Datenübertragungswegsegment Zentriwinkel von ungefähr 120° aufweisen und mit dem gegenüberliegenden Ende der akustooptischen Zelle durch die zweite Linse gekoppelt sind,

Symmetrie um die erste akustische Achse zwischen der ersten Lichtquelle und dem anderen Datenübertragungswegsegment und zwischen der zweiten Lichtquelle und dem einen Datenübertragungswegsegment zur Übertragung von der Endstation in zwei Richtungen vorliegt, und

Symmetrie zu der zweiten akustischen Achse zwischen dem ersten Photowandler und dem anderen Datenübertragungswegsegment und zwischen dem zweiten Photowandler und dem einen Datenübertragungswegsegment zum Empfang durch die Endstation in zwei Richtungen vorliegt.

8. Kupplung nach Anspruch 7, bei der

die Einrichtung zur Kopplung akustischer Volumenwellen in die Zelle erste und zweite akustische Wandler und erste und zweite akustische Absorber (46) umfaßt, die erste und zweite akustische Achse voneinander um ungefähr 60° beabstandet sind,

der erste Wandler und der erste Absorber in gegenüberliegender Beziehung an der akustooptischen Zelle in Ausrichtung mit der ersten akustischen Achse angebracht sind, um ein Ultraschallgitter zur Bragg-Reflexion von von der ersten Lichtquelle örtlich eingespeistem Licht zu dem anderen Datenübertragungswegsegment zu erzeugen und von der zweiten Lichtquelle zu dem einen Datenübertragungswegsegment, wenn die Endstation mit einem Übertragungsmodus betrieben wird, und

der zweite Wandler und der zweite Absorber in gegenüberliegender Beziehung an der akustooptischen Zelle in Ausrichtung mit der zweiten akustischen Achse angebracht sind, um ein Ultraschallgitter zur Bragg-Reflexion von entfernt eingespeistem Licht von dem anderen Datenübertragungswegsegment zu dem ersten Photodetektor zu erzeugen, und von dem einen Daten-

übertragungswegsegment zu dem zweiten Photo-detektor, wenn die Endstation mit ihrem Empfangsmodus betrieben wird.

9. Kupplung nach Anspruch 1 oder 2, bei der die Endstation ein Paar Lichtquellen und ein Paar Photowandler aufweist,

die erste und zweite Linse die Lichtquellen und die Datenübertragunswegsegmente an die gegenüberliegenden Enden der akusto-optischen Zelle symmetrisch in bezug auf die akustische Achse koppeln wodurch das Ultraschallgitter durch Bragg-Reflexion örtlich eingespeistes Licht von beiden Lichtquellen zu beiden Daten-übertragungswegsegmenten lenkt, wenn die Endstation mit einem Übertragunsmodus betrieben wird, und

die Kupplung eine Einrichtung enthält, um passiv einen Anteil des entfernt eingespeisten Lichtes von beiden Datenübertragunswegsegmenten zu den jeweiligen Photowandlern zurückzuführen, wenn die Endstation mit ihrem Empfangsmodus betrieben wird.

10. Kupplung nach Anspruch 9, bei der die Photowandler an gegenüberliegenden Seiten der Kupplung angebracht sind, und

die Rückführeinrichtung einen Strahlteiler (52) aufweist, der zwischen der ersten und zweiten Linse angeordnet ist, um entfernt eingespeistes Licht zu den Photowandlern zu reflektieren.

11. Kupplung nach Anspruch 9, bei der die Photowandler durch die erste bzw. zweite Linse mit den gegenüberliegenden Enden der akusto-optischen Zelle gekoppelt sind, und

die Rückführeinrichtung teilreflektierende, optische Beschichtungen auf den gegenüberliegenden Enden der akusto-optischen Zelle aufweist, um entfernt eingespeistes Licht zu den Photowandlern zu reflektieren.

12. Kupplung nach einem der vorhergehenden Ansprüche, bei der

die ersten und zweiten Linsen angepaßte, selbstfokussierende Stäbe sind.

## Revendications

1. Coupleur-T optique à sécurité positive (21) pour le couplage d'un terminal local ayant au moins une source lumineuse (25) à un bus optique segmenté de données (22), le coupleur comprenant:

—une cellule acousto-optique optiquement transparente (42).

—des première et seconde lentilles de collimation (41) chacune disposée respectivement à l'avant de chacune des deux extrémités opposées de la cellule pour coupler deux segments adjacents du bus de données aux extrémités opposées de la cellule; les lentilles ayant leurs axes alignés de manière à définir un axe optique généralement linéaire (43) pour le coupleur, et les segments du bus de données devenat être couplés à la cellule étant respectivement disposés sur le côte des lentilles espacées de la cellule, et symétriquement par rapport à l'axe optique, fournissant ainsi un trajet à sécurité positive pour la transmission de la lumière injectée à distance entre l'un et l'autre des segments de bus de données; et

un moyen (45) pour coupler des ondes acoustiques volumiques à la cellule lorsque le terminal fonctionne dans le mode de transmission, d'où la création d'un réseau ultrasonique à l'intérieur de la cellule suivant un axe acoustique (47),

—la source lumineuse du terminal étant disposée sur la surface de l'une des lentilles espacées de la cellule, et placée symétriquement autour de l'axe acoustique par rapport à un premier des segments du bus de données disposés sur la surface de l'autre lentille, d'où il résulte que la lumière injectée localement à partir de la source lumineuse est soumise à une réflexion Bragg par le réseau ultrasonique créé vers au moins le premier segment du bus de données lorsque le terminal fonctionne dans son mode de transmission.

2. Coupleur selon la revendication 1, dans lequel

—le terminal comporte en outre au moins un photodétecteur (26) en interface avec le coupleur, et

—le coupleur comprend un moyen de remise en direction vers le photodétecteur d'une partie de la lumière injectée à distance.

3. Coupleur selon la revendication 2, dans lequel le moyen de remise en direction est un moyen passif interposé dans le trajet à sécurité positive.

4. Coupleur selon la revendication 2 ou 3, dans lequel le moyen de remise en direction comporte:

—un moyen pour appliquer des ondes acoustiques volumiques de puissance relativement faible à la cellule acousto-optique lorsque le terminal fonctionne dans un mode autre qu'un mode de transmission, d'où la création d'un réseau ultrasonique relativement faible à l'intérieur de la cellule pour une réflexion Bragg de la lumière injectée à distance entre au moins l'un des segments du bus de données et le photodétecteur lorsque le terminal fonctionne dans un mode autre que le mode de transmission.

5. Coupleur selon la revendication 4, dans lequel

la réflexion Bragg des lumières injectées à distance et localement se produit sur des réseaux ultrasoniques créés suivant l'axe acoustique; et

—le segment du bus de données et le photodétecteur sont couplés à la cellule acousto-optique symétriquement par rapport à l'axe acoustique.

6. Coupleur selon la revendication 4, dans lequel:

—la réflexion Bragg des lumières injectées à distance et localement se produit sur des réseaux ultrasoniques créés suivant des axes acoustiques différents;

—la source lumineuse et le premier segment du bus de données sont couplés à la cellule acousto-optique symétriquement par rapport à un premier des axes acoustiques, d'où il résulte que la lumière injectée localement est soumise à une réflexion Bragg entre la source lumineuse et au moins le premier segment du bus de données lorsque le terminal fonctionne dans son mode de transmission; et

—le segment du bus de données et le photodétecteur sont couplés à la cellule acousto-optique symétriquement par rapport à l'autre des axes acoustiques, d'où il résulte que la lumière injectée à distance est soumise à une réflexion Bragg entre au moins le segment du bus de données et le photodétecteur lorsque le terminal fonctionne dans son mode de réception.

7. Coupleur selon la revendication 6, dans lequel:

—le terminal comporte une paire de sources lumineuses et une paire de photodétecteurs,

—une première des sources lumineuses, un premier des photodétecteurs et un premier des segments du bus de données étant sur des centres approximativement à 120° et couplés à une extrémité de la cellule acousto-optique par la première lentille;

—la seconde source lumineuse, le second photodétecteur, et l'autre segment du bus de donnée étant sur des centres approximativement à 120° et couplés à l'extrémité opposée de la cellule acousto-optique par la seconde lentille;

—une symétrie existant autour du premier axe acousto-optique entre la première source lumineuse et l'autre segment du bus de données, et entre la seconde source lumineuse et le segment du bus de données, pour une transmission bi-directionnelle à partir du terminal, et

—une symétrie existant autour du second axe acoustique entre le premier photodétectuer et l'autre segment du bus de données, et entre le second photodétecteur et le segment du bus de données pour une réception bidirectionnelle par le terminal.

8. Coupleur selon la revendication 7, dans lequel:

—le moyen pour appliquer des ondes acoustiques volumiques à la cellule comprend des premier et second transducteurs acoustiques et des premier et second absorbeurs acoustiques (46),

les premier et second axes acoustiques étant décalés l'une de l'autre d'environ 60°,

—le premier transducteur et le premier absorbeur étant montés en relation opposée sur la cellule acousto-optique en alignement avec le premier axe acoustique de manière à créer un réseau ultrasonique pour soumettre à une réflexion Bragg la lumière injectée localement entre la première source lumineuse et l'autre segment du bus de données, et entre la seconde source lumineuse et le segment du bus de données lorsque le terminal fonctionne dans le mode de transmission, et

—le second transducteur et le second absorbeur étant montés en relation opposée sur la cellule acousto-optique en alignement avec le second axe acoustique afin de créer un réseau ultrasonique pour soumettre à une réflexion Bragg la lumière injectée à distance entre l'autre segment du bus de données et le premier photodétecteur, et entre le segment du bus de données et le second photodétecteur lorsque le terminal fonctionne dans le mode de réception.

9. Coupleur selon l'une des revendications 1 ou 2, dans lequel:

—le terminal comporte une paire de sources lumineuses et une paire de photodétectuers, les première et seconde lentilles couplant les sources lumineuses et les segments du bus de données aux extrémités opposées de la cellule acousto-optique symétriquement par rapport à l'axe optique, d'où il résulte que le réseau ultrasonique soumet à une réflexion Bragg la lumière injectée localement entre l'une et l'autre des sources lumineuses et l'un et l'autre des segments du bus de donnéees, respectivement, lorsque le terminal fonctionne dans le mode de transmission et

—le coupleur comprend un moyen pour remettre passivement en direction une partie de la lumière injectée à distance entre l'un et l'autre des segments du bus de données et l'un et l'autre des photodétecteurs respectivement, lorsque le terminal fonctionne dans le mode de réception.

10. Coupleur selon la revendication, 9, dans lequel

—les photodétecteurs sont montés sur les côtés opposés du coupleur; et

—le moyen de remise en redirection comprend un dispositif de fractionnement de faisceau (52) interposé entre les première et seconde lentilles pour réfléchir la lumière injectée à distance vers les photodécteurs.

11. Coupleur selon la revendication 9, dans lequel:

—les photodétecteurs sont couplés par les première et seconde lentilles, respectivement, aux extrémités opposées de la cellule acousto-optique, et

—le moyen de remise en direction comprend des revêtements optiques partiellement réfléchissants aux extrémités opposées de la cellule acousto-optique afin de réfléchir la lumière injectée à distance vers les photodétecteurs.

12. Coupleur selon l'une quelconque des revendications précédentes, dans lequel:

—les première et seconde lentilles sont des tiges appariées à auto-focalisation.

FROM LOCAL TERMINAL

*FIG. 1A*

FROM LOCAL TERMINAL

*FIG. 1B*

0 082 623

FIG. 2

FROM LOCAL
TERMINAL

TO LOCAL
TERMINAL

FIG. 3

FIG. 4

FROM LOCAL
TERMINAL

*41A*  *47E*

*22C*

*43*  *25*

*26A*

TO LOCAL
TERMINAL

*47F*

## FIG. 5A

FROM LOCAL
TERMINAL

*47E*  *41B*

*47F*

*25A*  *26B*

*43*

*22D*

TO LOCAL
TERMINAL

## FIG. 5B

FROM LOCAL
TERMINAL

*45F*  *45E*

*43*

*47F*  *42C*

*47E*

*46E*  *46F*

## FIG. 5C

0 082 623

FROM LOCAL
TERMINAL

FIG. 6

TO LOCAL
TERMINAL

0 082 623

FROM LOCAL
TERMINAL

*41A*

*22C*

*43*

*25*

*26A*

*47G*

TO LOCAL
TERMINAL

*FIG. 7A*

TO LOCAL
TERMINAL

*41B*

*26B*

*43*

*25A*

*22D*

*47G*

FROM LOCAL
TERMINAL

*FIG. 7B*

FIG. 8A    FIG. 8B

FIG. 9A

FIG. 9B

FIG. 10

0 082 623